# EUROPÄISCHE PATENTSCHRIFT

(11) **EP 1 218 648 B1**
(45) Veröffentlichungstag und Bekanntmachung des Hinweises auf die Patenterteilung: **27.09.2006**
(21) Anmeldenummer: 01971900.4
(22) Anmeldetag: 10.08.2001
(51) Int. Cl.: F16D 69/04

(54) **VERFAHREN ZUR HERSTELLUNG EINER BREMSBACKE**
METHOD FOR PRODUCING A BRAKE SHOE
PROCEDE DE FABRICATION D'UN SEGMENT DE FREIN

(30) Priorität: 23.08.2000 DE 10041308
(43) Veröffentlichungstag der Anmeldung: 03.07.2002
(73) Patentinhaber: TMD Friction GmbH, 51381 Leverkusen (DE)
(72) Erfinder: WIATEREK, Christian, 51519 Odenthal (DE)
(74) Vertreter: Müller, Eckhard
(86) Internationale Anmeldenummer: PCT/EP2001/009249
(87) Internationale Veröffentlichungsnummer: WO 2002/016795

(56) Entgegenhaltungen:
- EP-A- 0 745 781
- DE-A- 4 431 642
- DE-A- 19 543 329
- US-A- 5 141 083

## Beschreibung

Die Erfindung betrifft ein Verfahren zur Herstellung einer Bremsbacke nach dem Oberbegriff des Anspruchs 1. So ein Verfahren geht z.B. aus DE-A-4 431 642 hervor.

Bei einem bekannten Verfahren zur Herstellung einer Bremsbacke, insbesondere für Scheibenbremsen von Kraftfahrzeugen, wird ein Reibbelag auf einer Trägerplatte aus einem in eine Pressform eingebrachten Reibmaterial vorgeformt und durch Pressformen des Reibmaterials unter Druck und Hitze zu einem mit der Trägerplatte fest verbundenen Reibbelag fertiggepresst. Dabei ist es auch bekannt, zwischen dem Reibbelag und der Trägerplatte eine Zwischenschicht anzuordnen, die einerseits schwingungsdämpfend wirkt und andererseits den Reibbelag mit der Trägerplatte verklebt.

Es ist ferner bekannt. Reibbeläge herzustellen, die Nuten in einem bestimmten Muster aufweisen, die sich in der Tiefe mindestens bis zur Zwischenschicht erstrecken. Nachteilig ist bei diesem Herstellverfahren, dass die Festigkeit des durch Nuten unterteilten Reibbelages gering ist und ein Ausbrechen von Reibbelagabschnitten bei hoher mechanischer Belastung der Bremsbacke nicht ausgeschlossen ist.

Der Erfindung liegt die Aufgabe zugrunde, ein Verfahren zur Herstellung einer Bremsbacke anzugeben, das die Herstellung eines durch Nuten unterteilten Reibbelages mit verbesserten mechanischen Festigkeitseigenschaften ermöglicht.

Zur Lösung dieser Aufgabe dienen die Merkmale des Anspruchs 1.

Die Erfindung sieht in vorteilhafter Weise vor, dass in dem Reibbelag zumindest zur Reibbelagoberfläche offene Nuten eingearbeitet werden, dass der mit Nuten versehene Reibbelag einem Scorch-Prozess ausgesetzt wird, dass ein elastisches Füllmittel in die Nuten nach dem Scorch-Prozess eingebracht wird, und dass nach dem Einbringen des Füllmittels die Bremsbacke je nach verwendetem Füllmittel einem Trocknungsprozess, einem Härtungsprozess oder einem Vernetzungsprozess ausgesetzt wird.

Das nicht aus Reibmaterial bestehende Füllmittel verbindet die zwischen den Nuten befindlichen Belagabschnitte, so dass die Festigkeit des Reibbelags unter Beibehaltung einer hohen Elastizität insgesamt erhöht wird. Das Verfahren sieht in vorteilhafter Weise vor, dass nach dem Einarbeiten der Nuten in den Reibbelag dieser zunächst einem Scorch-Prozess ausgesetzt wird, und dass erst anschließend ein elastische Füllmittel in die Nuten eingefüllt wird.

Der Reibbelag kann gemeinsam mit einer zwischen Reibbelag und Trägerplatte angeordneten Zwischenschicht verpresst werden.

Vorzugsweise ist vorgesehen, dass die Nuten beim Pressformen des Reibbelages unter Druck und Hitze mit Hilfe eines entsprechend dem vorgesehenen Nutmuster gestalteten Presswerkzeug hergestellt werden.

Alternativ kann vorgesehen sein, dass der Reibbelag zunächst ohne Nuten durch Pressformen hergestellt wird, und dass die Nuten vor dem Scorch-Prozess in den Reibbelag, beispielsweis zerspanend, eingearbeitet werden.

Die Nuten können von der Trägerplatte wegweisend durchgängig durch den Reibbelag eingearbeitet werden, so dass sie zur Reiboberfläche hin und zu den seitlichen Kanten hin offen sind. Während des Einfüllens und Trocknens des Füllmittels werden dabei die seitlichen Austrittsöffnungen der Nuten an den Reibbelagkanten des Reibbelages mit einer Form oder Abdeckung verschlossen bis das Füllmittel in den festen Zustand überführt worden ist.

Alternativ können die Nuten mit einem Nutenauslauf in die Reibbelagoberfläche hergestellt werden, so dass die Nuten nur zu der Reibbelagoberfläche hin offen sind. Dies hat den Vorteil, dass keine Einrichtungen erforderlich sind, die die seitlichen Austrittsöffnungen der Nuten beim Einfüllen und Aushärten des Füllmittels verschließen sind.

Der Reibbelag kann nach dem Pressformen und vor dem Scorch-Prozess zunächst gehärtet und anschließend geschliffen werden.

Alternativ kann der Reibbelag nach dem Pressformen und vor dem Scorch-Prozess zunächst geschliffen und anschließend gehärtet werden.

Die Nuten können bis zur Reibbelagoberfläche oder alternativ nur teilweise mit Füllmaterial ausgefüllt werden.

Im folgenden werden unter Bezugnahme auf die Zeichnungen Ausführungsbeispiele der Erfindung näher erläutert:

Es zeigen:
- Fig. 1: ein Flussdiagramm des Herstellverfahrens,
- Fig. 2: eine erfindungsgemäß hergestellte Bremsbacke, und
- Fig. 3: einen Schnitt entlang der Linie III-III in Fig. 2.

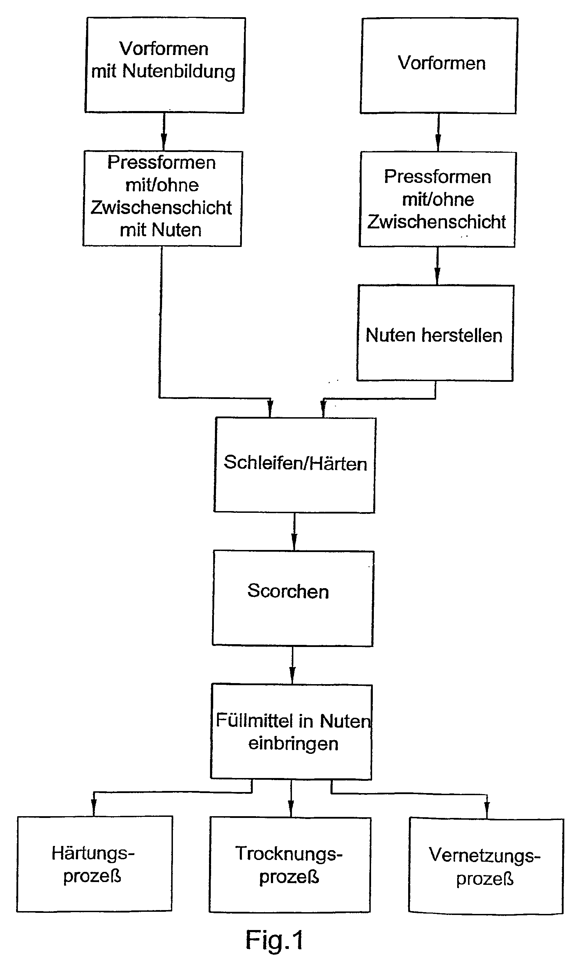

Fig. 1 zeigt einen Verfahrensablauf zum Herstellen einer Bremsbacke 1, bei dem zunächst ein Reibbelagmaterial vorgeformt wird und anschließend in einer Pressform unter Druck und Hitze fertiggepresst wird.

Das Reibmaterial kann gemäß linkem Teil des Ablaufdiagramms vorgeformt und unter Druck und Hitze mit Hilfe eines entsprechend dem vorgesehenen Nutmuster gestalteten Presswerkzeugs in einem Pressformschritt mit Nuten fertiggepresst werden.

Alternativ kann das Reibmaterial vorgeformt werden und der Reibbelag durch Pressformen ohne Nutenbildung fertiggepresst werden; wobei die Nuten anschließend, z.B. spanabhebend, in den Reibbelag eingearbeitet werden.

In beiden Fällen kann der Reibbelag mit bzw. ohne Zwischenschicht mit der Trägerplatte verbunden werden.

Der mit Nuten versehene Reibbelag wird anschließend zunächst geschliffen und dann gehärtet oder zunächst gehärtet und dann geschliffen.

Die Nutenherstellung kann in dem Fall, in dem die Nuten nachträglich eingearbeitet werden auch nach dem Schleifen bzw. Härten erfolgen.

Die auf diese Weise hergestellte Bremsbacke 1 mit dem mit Nuten versehenen Reibbelag 6 wird anschließend einem Scorch-Prozess ausgesetzt.

Nach dem Scorch-Prozess wird das Füllmittel 12 in pastöser Form in die Nuten 8 eingebracht. Als Füllmittel 12 sind unterschiedliche Materialien einsetzbar.

Das Füllmittel 12 kann beispielsweise aus einem unmodifizierten oder modifizierten Flüssigharz bestehen, das durch Polyaddition, Polykondensation oder radikalische Polymerisation ausgehärtet wird.

Alternativ kann das Füllmittel 12 aus einem flüssigen Kautschuk in Latexphase, aus einer pastösen Gummimischung oder aus Silikon bestehen.

Als Füllmittel kann auch Novolak eingesetzt werden, das fest in Lösungsmittel eingebracht wird. Das Lösungsmittel kann unter Temperatur ausgetrocknet werden, wobei Novolak bei einer Temperatur bis zu 200°C ausgehärtet werden kann.

Alle vorgenannten Füllmaterialien 12 können versetzt sein mit Abrasivstoffen/Schleifpartikel als Reibstützer, und/oder mit organischen oder anorganischen Fasern zur mechanischen Stabilisierung. Die anorganischen Fasern können künstliche Mineralfasern, z.B. Steinwolle, und/oder Metallfasern sein, z.B. Stahl-, Kupfer-, Messing-, Bronze-Fasern in Form von Wolle oder in Spanform.

Je nach verwendetem Füllmittel 12 wird die Bremsbacke 1 dann einem Prozess-Schritt zugeführt, in dem das Füllmittel 12 aushärtet, getrocknet bzw. vernetzt wird.

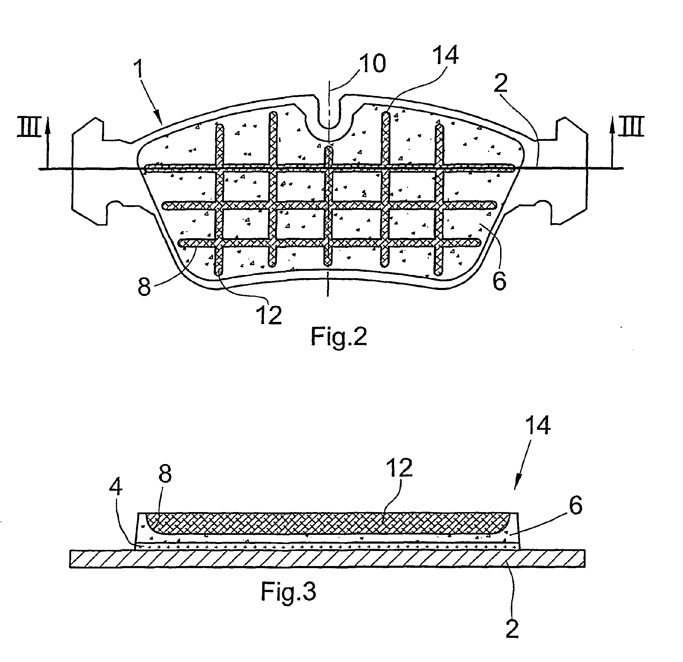

Die in Fig. 2 gezeigte Bremsbacke 1 für eine Scheibenbremse von Kraftfahrzeugen weist eine Trägerplatte 2 auf, auf der ein Reibbelag 6 aufgeklebt ist, in dem von der Trägerplatte 2 wegweisende offene Nuten 8 in einem Nutmuster angeordnet sind, wobei die Nuten 8 einerseits parallel zu einer Symmetrieachse 10 der Bremsbacke 1 verlaufen und andererseits orthogonal dazu, so dass sie ein Nutenraster bilden, durch das der Reibbelag 6 in eine Vielzahl von Belagabschnitte unterteilt wird.

Die Nuten 8 sind mit einem Füllmittel 12 ausgefüllt, das die Belagabschnitte untereinander elastisch verbindet, wobei das Füllmittel fest an den Wandungen der Belagabschnitte anhaftet und somit einerseits die Festigkeitserhöhung des in Belagabschnitte unterteilten Reibbelages 6 und andererseits deren Elastizität bewirkt.

Die Nuten 8 sind in dem Ausführungsbeispiel der Fig. 3 nicht bis zur Zwischenschicht 4 oder bis zur Trägerplatte 2 vertieft. Das Füllmaterial 12 kann auch nur teilweise die Nuten 8 ausfüllen.

## Patentansprüche

1. Verfahren zum Herstellen einer Bremsbacke (1), insbesondere für Scheibenbremsen von Kraftfahrzeugen, durch Vorformen eines Reibbelages (6) auf einer Trägerplatte (2) aus einem in eine Pressform eingebrachten Reibmaterial und durch Pressformen des Reibmaterials unter Druck und Hitze zu einem Reibbelag (6),
**dadurch gekennzeichnet,**
**dass** in den Reibbelag (6) zumindest zur Reiboberfläche offene Nuten (8) eingearbeitet werden,
**dass** der mit Nuten (8) versehene Reibbelag (6) einem Scorch-Prozess ausgesetzt wird,
**dass** ein elastisches Füllmittel (12) in die Nuten (8) nach dem Scorch-Prozess eingebracht wird, und
**dass** nach dem Einbringen des Füllmittels (12) die Bremsbacke (1) je nach verwendetem Füllmittel (12) einem Trocknungsprozess, einem Härtungsprozess, oder einem Vernetzungsprozess ausgesetzt wird.

2. Verfahren nach Anspruch 1, **dadurch gekennzeichnet, dass** der Reibbelag (6) gemeinsam mit einer zwischen Reibbelag (6) und Trägerplatte (2) angeordneten Zwischenschicht (4) verpresst wird.

3. Verfahren nach Anspruch 1 oder 2, **dadurch gekennzeichnet, dass** die Nuten (8) beim Pressformen des Reibbelages (6) unter Druck und Hitze mit Hilfe eines entsprechend dem vorgesehenen Nutmuster gestalteten Presswerkzeug hergestellt werden.

4. Verfahren nach Anspruch 1 oder 2, **dadurch gekennzeichnet, dass** der Reibbelag (6) zunächst ohne Nuten (8) durch Pressformen hergestellt wird, und dass die Nuten (8) vor dem Scorch-Prozess in den Reibbelag (6) eingearbeitet werden.

5. Verfahren nach einem der Ansprüche 1 bis 4, **dadurch gekennzeichnet, dass** die Nuten (8) durchgängig durch den Reibbelag (6) eingearbeitet werden, und dass während des Einfüllens und des Trocknens des Füllmittels (12) die seitlichen Austrittsöffnungen der Nuten (8) an den Reibbelagkanten des Reibbelages (6) mit einer Form oder Abdeckung zugehalten werden.

6. Verfahren nach einem der Ansprüche 1 bis 4, **dadurch gekennzeichnet, dass** die Nuten (8) mit einem Nutenauslauf (14) in die Reibbelagoberfläche hergestellt werden, so dass die Nuten (8) nur zu der Reibbelagoberfläche offen sind.

7. Verfahren nach einem der Ansprüche 1 bis 6, **dadurch gekennzeichnet, dass** der Reibbelag (6) nach dem Pressformen und vor dem Scorch-Prozess zunächst gehärtet und anschließend geschliffen wird.

8. Verfahren nach einem der Ansprüche 1 bis 6, **dadurch gekennzeichnet, dass** der Reibbelag (6) nach dem Pressformen und vor dem Scorch-Prozess zunächst geschliffen und anschließend gehärtet wird.

9. Verfahren nach einem der Ansprüche 1 bis 7, **dadurch gekennzeichnet, dass** die Nuten (8) nur teilweise mit dem Füllmittel (12) ausgefüllt werden.

## Claims

1. Method of producing a brake shoe (1), particularly for disc brakes of motor vehicles, by preshaping a friction lining (6) on a carrier plate (2) from a friction material introduced into a press mould and by press-moulding the friction material under pressure and heat to form a friction lining (6), **characterised in that** grooves (8) open at least towards the friction surface are formed in the friction lining (6), the friction lining (6) provided with the grooves (8) is subjected to a scorching process, a resilient filler (12) is introduced into the grooves (8) after the scorching process and after introduction of the filler (12) the brake shoe (1) is subjected to a drying process, a hardening process or a wetting process depending on the respectively employed filler (12).

2. Method according to claim 1, **characterised in that** the friction lining (6) is pressed together with an intermediate layer (4) arranged between friction lining (6) and carrier plate (2).

3. Method according to claim 1 or 2, **characterised in that** the grooves (8) are produced, during press-moulding of the friction lining (6), under pressure and heat with the help of a press tool shaped in correspondence with the intended groove pattern.

4. Method according to claim 1 or 2, **characterised in that** the friction lining (6) is initially produced, without grooves (8), by press moulding and that the grooves (8) are formed in the friction lining (6) prior to the scorching process.

5. Method according to one of claims 1 to 4, **characterised in that** the grooves (8) are formed continuously through the friction lining (6) and that during the filing and drying of this filler (12) the lateral outlet openings of the grooves (8) at the friction lining edges of the friction lining are kept closed with the help of a mould or a cover.

6. Method according to one of claims 1 to 4, **characterised in that** the grooves (8) are produced with a groove outlet (14) in the friction lining surface so that the grooves (8) are open only towards the friction lining surface.

7. Method according to one of claims 1 to 6, **characterised in that** the friction lining (6) after the press moulding and prior to the scorching process is initially hardened and subsequently ground.

8. Method according to one of claims 1 to 6, **characterised in that** the friction lining (6) after the press moulding and prior to the scorching process is initially ground and subsequently hardened.

9. Method according to one of claims 1 to 7, **characterised in that** the grooves (8) are only partly filled with the filler (12).

## Revendications

1. Procédé de fabrication d'un segment de frein (1), en particulier pour freins à disques de véhicules automobiles, par pré-formation d'une garniture de friction (6) sur une plaque de support (2) à partir d'un matériau de friction introduit dans un moule à presse, puis par moulage du matériau de friction sous pression et chaleur en une garniture de friction (6),
**caractérisé en ce que** dans la garniture de friction (6) sont incorporées des rainures (8) au moins ouvertes vers la surface de friction,
**en ce que** la garniture de friction (6) munie des rainures (8) est soumise à un processus de pré-vulcanisation,
**en ce qu'**un agent de charge élastique (12) est incorporé dans les rainures (8) après le processus de pré-vulcanisation, et
**en ce qu'**après l'incorporation de l'agent de charge (12), le segment de frein (1), en fonction de l'agent de charge (12) utilisé, est soumis à un processus de séchage, à un processus de durcissement ou à un processus de réticulation.

2. Procédé selon la revendication 1, **caractérisé en ce que** la garniture de friction (6) est comprimée conjointement avec une couche intermédiaire (4) disposée entre la garniture de friction (6) et la plaque de support (2).

3. Procédé selon la revendication 1 ou 2, **caractérisé en ce que** les rainures (8) sont fabriquées lors du moulage de la garniture de friction (6) sous pression et chaleur, à l'aide d'un outil de compression formé selon le motif de rainures prévu.

4. Procédé selon la revendication 1 ou 2, **caractérisé en ce que** la garniture de friction (6) est d'abord fabriquée sans rainures (8) par moulage, et **en ce que** les rainures (8) sont incorporées dans la garniture de friction (6) avant le processus de pré-vulcanisation.

5. Procédé selon l'une des revendications 1 à 4, **caractérisé en ce que** les rainures (8) sont incorporées de manière constante à travers la garniture de friction (6), et **en ce que** pendant le remplissage et le séchage de l'agent de charge (12), les ouvertures de sortie latérales des rainures (8) sont fermées au niveau des arêtes de garniture de friction de la garniture de friction (6) avec un moule ou un chapeau.

6. Procédé selon l'une des revendications 1 à 4, **caractérisé en ce que** les rainures (8) sont fabriquées avec une sortie de rainure (14) dans la surface de garniture de friction de façon telle que les rainures (8) sont ouvertes uniquement vers la surface de garniture de friction.

7. Procédé selon l'une des revendications 1 à 6, **caractérisé en ce que** la garniture de friction (6), après le moulage et avant le processus de pré-vulcanisation, est d'abord durcie puis rectifiée.

8. Procédé selon l'une des revendications 1 à 6, **caractérisé en ce que** la garniture de friction (6), après le moulage et avant le processus de pré-vulcanisation, est d'abord rectifiée puis durcie.

9. Procédé selon l'une des revendications 1 à 7, **caractérisé en ce que** les rainures (8) ne sont remplies que partiellement avec l'agent de charge (12).
